# EUROPÄISCHE PATENTSCHRIFT

(11) **EP 3 319 830 B1**
(45) Veröffentlichungstag und Bekanntmachung des Hinweises auf die Patenterteilung: **27.09.2023**
(21) Anmeldenummer: 16736435.5
(22) Anmeldetag: 06.07.2016
(51) Int. Cl.: B60K 13/04, B60K 15/03

(54) **FROSTRESISTENTER BETRIEBSFLÜSSIGKEITSBEHÄLTER MIT BEWEGLICHEN BAUTEILEN**
FROST-RESISTANT OPERATING FLUID CONTAINER WITH MOVABLE PARTS
RÉSERVOIR DE LIQUIDE DE FONCTIONNEMENT RÉSISTANT AU GEL AVEC DES COMPOSANTS MOBILES

(30) Priorität: 09.07.2015 DE 102015212904
(43) Veröffentlichungstag der Anmeldung: 16.05.2018
(73) Patentinhaber: Kautex Textron GmbH & Co. KG, 53229 Bonn (DE)
(72) Erfinder: GRUNERT, Ottmar, 07549 Gera (DE); KOUKAN, Ibrahim, 50999 Köln (DE); SCHUMACHER, Nicolai, 53227 Bonn (DE)
(74) Vertreter: Richly & Ritschel Patentanwälte PartG mbB
(86) Internationale Anmeldenummer: PCT/EP2016/065953
(87) Internationale Veröffentlichungsnummer: WO 2017/005780

(56) Entgegenhaltungen:
- DE-A1-102013 013 213
- DE-T5-112010 000 846
- US-A- 5 172 714
- US-A1- 2004 221 890
- US-A1- 2005 284 875
- US-A1- 2012 318 794

## Beschreibung

Die vorliegende Erfindung betrifft einen Betriebsflüssigkeitsbehälter mit beweglichen Bauteilen, die mit der Betriebsflüssigkeit in Kontakt bringbar sind und deren Festfrieren bei niedrigen Temperaturen verhindert wird, womit ihre Beweglichkeit gewährleistet bleibt.

Ein Betriebsflüssigkeitsbehälter kann vorzugsweise ein Flüssigkeitsbehälter für eine wässrige Harnstofflösung sein, die für ein SCR-Verfahren (*Selectiv Catalytic Reduction*) benötigt wird, um bei Dieselfahrzeugen die Stickoxydemission zu senken. Diese wässrige Harnstofflösung wird von dem SCR-Katalysator in den Abgasstrang, zum Beispiel mittels einer Dosierpumpe oder eines Injektors, eingespritzt. Solche bei Kraftfahrzeugen verwendete Harnstofflösungen weisen in der Regel die Tendenz auf, bei Temperaturen unterhalb von -11 °C einzufrieren. Der Betriebsflüssigkeitsbehälter kann jedoch auch ein Kraftstofftank, insbesondere ein Kraftstofftank für Dieselkraftstoffe sein, da Dieselkraftstoff ebenfalls bei niedrigen Temperaturen einfrieren kann. Ein weiteres Beispiel für einen Betriebsflüssigkeitsbehälter ist ein Behälter für Scheibenwischwasser.

Im Folgenden wird auf einen Betriebsflüssigkeitsbehälter für wässrige Harnstofflösungen Bezug genommen, wobei sämtliche Ausführungen entsprechend auch für Flüssigkeitsbehälter für Kraftstoffe, Scheibenwischwasser, oder allgemein für Betriebsflüssigkeitsbehälter anwendbar sind.

Derzeit im Stand der Technik bekannte Betriebsflüssigkeitsbehälter weisen unterschiedliche Komponenten, wie beispielsweise (Abschalt-, Belüftungs-, oder Entlüftungs-)Ventile, Füllstandsensoren, oder Rückschlagklappen auf, die bewegliche Bauteile aufweisen und welche mit der Betriebsflüssigkeit in Kontakt kommen können oder sollen. Beim Unterschreiten einer für jede Betriebsflüssigkeit charakteristischen Temperatur (Gefrierpunkt) friert diese ein und geht in den festen Phasenzustand über. Im Falle der für Kraftfahrzeuge verwendeten wässrigen Harnstofflösungen liegt dieser Gefrierpunkt bei ungefähr -11 °C.

Das Festfrieren findet insbesondere an den Kontaktbereichen zwischen den beweglichen Bauteilen der Komponenten statt, die in der Regel nur mit einem dünnen Film der Betriebsflüssigkeit benetzt sind. Die Folge hiervon ist, dass die relative Beweglichkeit der beweglichen Bauteile zueinander verloren geht und damit die Komponente des Betriebsflüssigkeitsbehälters funktionslos wird.

Die US 2005/284875 beschreibt einen Betriebsflüssigkeitsbehälter. Die US 5 172 714 A beschreibt ein Kraftstoffrückschlagventil für einen Kraftstofftank eines Kraftfahrzeugs. Die DE 11 2010 000846 T5 beschreibt eine deckellose Anordnung eines Kraftstofftankeinfüllstutzens. Die US 2004/221890 A1 beschreibt ein Tankregelventil für einen Kraftstofftank. Die DE 10 2013 013213 A1 beschreibt einen Betriebsflüssigkeitsbehälter mit integriertem Ent- und/oder Belüftungsventil. Die US 2012/318794 A1 beschreibt ein hebelbasiertes Entlüftungsventil.

Der vorliegenden Erfindung liegt die Aufgabe zugrunde, einen verbesserten Betriebsflüssigkeitsbehälter bereitzustellen, dessen bewegliche Bauteile auch bei niedrigen Temperaturen, insbesondere bei Temperaturen unterhalb von -11 °C, nicht festfrieren. In anderen Worten ist die Aufgabe der vorliegenden Erfindung die Bereitstellung eines Betriebsflüssigkeitsbehälters mit relativ zueinander beweglichen Bauteilen, der bei niedrigen Temperaturen, vorzugsweise bei Temperaturen unterhalb von -11 °C betrieben werden kann und/oder vor dem Festfrieren der beweglichen Bauteile geschützt ist.

Diese Aufgabe wird erfindungsgemäß durch ein Betriebsflüssigkeitsbehälter mit den in Anspruch 1 angegebenen Merkmalen gelöst. Vorteilhafte Ausgestaltungen sind in dessen Unteransprüchen angegeben.

Im Genaueren weist der erfindungsgemäße Betriebsflüssigkeitsbehälter zur Aufnahme einer wässrigen Harnstofflösung für ein SCR-Verfahren zumindest zwei relativ zueinander bewegliche und mit der Harnstofflösung in Kontakt bringbare Bauteile auf, wobei am ersten Bauteil und/oder am zweiten Bauteil zumindest ein Abstandshalter angebracht ist, der zwischen dem ersten Bauteil und dem zweiten Bauteil angeordnet ist, wobei der Abstandshalter lediglich mit dem ersten Bauteil oder lediglich mit dem zweiten Bauteil verbunden ist und wobei das erste Bauteil mit dem zweiten Bauteil mittels des Abstandshalters in Kontakt bringbar ist.

Der erfindungsgemäße Betriebsflüssigkeitsbehälter zeichnet sich dadurch aus, dass die Kontaktfläche zwischen den zumindest zwei relativ zueinander beweglichen Bauteilen minimiert wird. Die beiden relativ zueinander beweglichen Bauteile kontaktieren sich dann lediglich an dieser minimierten Kontaktfläche. Durch diese minimierten Kontaktfläche wird gleichzeitig die Fläche minimiert, welche mit Betriebsflüssigkeit benetzt sein kann und die bei einem Einfrieren dieser Betriebsflüssigkeit zu einem Verlust der Beweglichkeit der beiden beweglichen Bauteile zueinander führen kann. Somit wird entweder ein Festfrieren der beiden Bauteile miteinander verhindert, oder die zum Lösen einer solchen Verbindung erforderliche Kraft minimiert.

Der Betriebsflüssigkeitsbehälter kann jeglicher zur Aufnahme einer Betriebsflüssigkeit geeignete Behälter sein, zum Beispiel ein Kraftstofftank, insbesondere ein Dieselkraftstofftank, oder ein Behälter für Scheibenwischwasser. Erfindungsgemäß handelt es sich bei dem Betriebsflüssigkeitsbehälter um einen Harnstoffbehälter, insbesondere für wässrige Harnstofflösung für ein SCR-Verfahren. Weiter bevorzugt ist der Betriebsflüssigkeitsbehälter aus Kunststoff hergestellt, insbesondere im Spritzgussverfahren.

Die zumindest zwei relativ zueinander beweglichen Bauteile können innerhalb oder außerhalb des Betriebsflüssigkeitsbehälters angeordnet sein, vorzugsweise sind sie jedoch innerhalb desselben angeordnet, d.h. in diesen integriert. Weiter bevorzugt besteht zumindest eines der beiden Bauteile, bevorzugter alle, im Wesentlichen aus Kunststoff. Noch bevorzugter wurde(n) es/sie mittels des Spritzgussverfahrens hergestellt.

Bei der Betriebsflüssigkeit kann es sich um eine beliebige Flüssigkeit handeln, die für den Betrieb eines Kraftfahrzeugs Verwendung findet. Beispiele für solche Betriebsflüssigkeiten sind Kraftstoffe, insbesondere Dieselkraftstoff, oder Wasser, bzw. wässrige Lösungen wie Scheibenwischwasser, oder vorzugsweise eine wässrige Harnstofflösung.

Die Betriebsflüssigkeit kann bei Kontaktierung mit den zumindest zwei Bauteilen in Gasform oder in Flüssigkeitsform vorliegen, vorzugsweise liegt die Betriebsflüssigkeit in Flüssigkeitsform vor, wie dies regulär der Fall ist, wenn eine Betankung des Betriebsflüssigkeitsbehälters mit den zuvor genannten Betriebsflüssigkeiten durchgeführt wird.

Der Betriebsflüssigkeitsbehälter weist weiterhin zumindest zwei relativ zueinander bewegliche Bauteile auf, wovon eines direkt oder indirekt mit dem Betriebsflüssigkeitsbehälter verbunden ist und das jeweils andere Bauteil nicht mit dem Betriebsflüssigkeitsbehälter verbunden ist. Bevorzugt ist das direkt oder indirekt mit dem Betriebsflüssigkeitsbehälter verbundene Bauteil nicht relativ zum Betriebsflüssigkeitsbehälter beweglich, sondern unbeweglich, d.h. ortsfest, in Bezug zu diesem angebracht.

Am ersten Bauteil und/oder am zweiten Bauteil der zumindest zwei relativ zueinander beweglichen Bauteile des Betriebsflüssigkeitsbehälters ist zumindest ein Abstandshalter angebracht. In anderen Worten ist ein einzelner Abstandshalter lediglich mit einem der beiden Bauteile verbunden und niemals mit beiden Bauteilen gleichzeitig. Hierdurch ist das nicht mit dem Abstandshalter verbundene Bauteil lediglich über den Abstandshalter mit dem mit dem Abstandshalter verbundenen Bauteil in Kontakt bringbar und eine relative Beweglichkeit der beiden Bauteile zueinander ist gewährleistet. Mit dem Begriff "verbunden" wird im Sinne dieser Erfindung und bei Bezugnahme auf die Befestigung des Abstandshalters an dem Bauteil bevorzugt eine stoffschlüssige Verbindung bezeichnet. Umgekehrt schließt der Begriff "Kontaktierung" eine stoffschlüssige Verbindung aus. Der zumindest eine Abstandshalter kann einstückig mit dem Bauteil geformt sein, mit dem er verbunden ist, und/oder anderweitig stoffschlüssig mit diesem verbunden sein, beispielsweise durch Verklebung, oder Verschweißung. In einer besonders bevorzugten Ausführungsform bestehen das Bauteil und der damit verbundene Abstandshalter aus Kunststoff und sie wurden einstückig im Spritzgussverfahren geformt.

Bevorzugt ist der zumindest eine Abstandshalter nur mit einem der beiden relativ zueinander beweglichen Bauteile verbunden, d.h. nur eines der beiden Bauteile weist zumindest einen Abstandshalter auf. Noch bevorzugter handelt es sich bei diesem Bauteil um das Bauteil, welches nicht direkt oder indirekt mit dem Betriebsflüssigkeitsbehälter verbunden ist.

Weiterhin ist der zumindest eine Abstandshalter zwischen dem ersten Bauteil und dem zweiten Bauteil angeordnet, womit auch der Kontaktierungsbereich, der durch den Abstandshalter und das kontaktierte Bauteil gebildet wird, zwischen dem ersten Bauteil und dem zweiten Bauteil angeordnet ist. In anderen Worten ist die Oberfläche desjenigen Bauteils, mit welchem der Abstandshalter nicht verbunden ist, d.h. welches lediglich durch den Abstandshalter kontaktiert wird, eine im Wesentlichen durchgängige, d.h. ununterbrochene, bevorzugt eine glatte, Oberfläche. Insbesondere weist diese durchgängige Oberfläche keinerlei Ausnehmungen oder Durchbrechungen auf, in welche der Abstandshalter eingreifen könnte.

Vorzugsweise ist der durch Abstandshalter und kontaktiertes Bauteil gebildete Kontaktierungsbereich im Wesentlichen punktförmig oder linienförmig. Hierdurch wird in vorteilhafter Weise erreicht, dass der Bereich zwischen den beiden relativ zueinander beweglichen Bauteilen, in welchem es zum Einfrieren der Betriebsflüssigkeit kommen könnte, minimiert wird. Dementsprechend wird entweder ein Festfrieren der beiden Bauteile miteinander verhindert, oder jedenfalls die zum Lösen einer solchen Verbindung erforderliche Kraft minimiert.

In einer Ausführungsform der Erfindung bilden die zumindest zwei relativ zueinander beweglichen Bauteile ein Ventil, insbesondere ein Abschaltventil, ein Belüftungsventil, oder ein Entlüftungsventil aus. Das erste Bauteil ist hierbei als hohlförmiges Ventilgehäuse ausgeführt, das zweite Bauteil als ein im Ventilgehäuse und Ventilkörper eine im Wesentlichen zylinderförmige Gestalt mit einem kreis- oder ellipsenförmigen Querschnitt auf.

Bevorzugt ist der zumindest eine Abstandshalter an der Umhüllenden des Ventilgehäuses und/oder des Ventilkörpers angeordnet. Hierdurch wird vorteilhafter Weise eine Annäherung, oder Kontaktierung, insbesondere über einen größeren Bereich, der beiden Umhüllenden vermieden und somit einem Festfrieren der beiden Bauteile miteinander entgegengewirkt.

Der zumindest eine Abstandshalter kann mit dem Ventilgehäuse und/oder dem Ventilkörper verbunden sein. In einer besonders bevorzugten Ausführungsform ist er mit dem lageveränderlicher Ventilkörper verbunden. Dies hat den Vorteil, dass ein solches Bauteil einfacher, zum Beispiel, mittels des Spritzgussverfahrens hergestellt werden kann. Verglichen hiermit sind röhrenförmige Körper mit Vorstülpungen an deren Innenwand im Spritzgussverfahren weniger einfach herstellbar.

IDie zumindest zwei relativ zueinander beweglichen Bauteile können einen Flüssigkeitsstandssensor bilden, wobei das erste Bauteil bevorzugt als ein Führungsbauteil und das zweite Bauteil als bezüglich des Führungsbauteils lageveränderlicher Auftriebskörper (Schwimmer) ausgebildet ist. Der Auftriebskörper weist eine geringere Dichte auf, als die mit den Bauteilen in Kontakt bringbare Betriebsflüssigkeit.

Bevorzugt ist das Führungsbauteil als Schaft ausgebildet, der hohlförmig sein kann. Weiter bevorzugt ist der Auftriebskörper lageveränderlich entlang der Längsausrichtung, d.h. der axialen Erstreckung, des Schafts. Ebenfalls bevorzugt weisen Führungsbauteil und Auftriebskörper eine im Wesentlichen zylinderförmige Gestalt mit einem kreis- oder ellipsenförmigen Querschnitt auf.

Der Auftriebskörper kann an der Außenseite, oder - im Fall eines hohlförmig ausgebildeten Führungsbauteils - im Führungsbauteil selbst angeordnet und gegenüber diesem lageveränderlich sein.

Der zumindest eine Abstandshalter kann mit dem Führungskörper und/oder dem Auftriebskörper verbunden sein. In einer besonders bevorzugten Ausführungsform ist er mit dem lageveränderlicher Auftriebskörper verbunden.

Bevorzugt ist der zumindest eine Abstandshalter an der Umhüllenden des Führungskörpers und/oder des Auftriebskörpers angeordnet. Hierdurch wird vorteilhafter Weise eine Annäherung, oder eine Kontaktierung, insbesondere über einen größeren Bereich, der beiden Umhüllenden vermieden und somit einem Festfrieren der beiden Bauteile entgegengewirkt.

Die Position des Auftriebskörpers kann bevorzugt berührungslos mittels eines induktiven Sensors erfasst werden. Ebenfalls bevorzugt kann der Auftriebskörper magnetisch sein. Somit kann dessen Position mittels eines Magnetschalters (Reedkontakt) oder eines magnetostriktiven Sensors erfasst werden.

Die zumindest zwei relativ zueinander beweglichen Bauteile können eine Rückschlagklappe bilden, wobei das erste Bauteil als das Gehäuse der Rückschlagklappe und das zweite Bauteil als Klappe der Rückschlagklappe ausgebildet ist, mittels derer eine Öffnung des Gehäuses verschließbar ist, indem vorzugsweise die die Öffnung umschließende Stirnseite des Gehäuses kontaktiert wird. Das erste Bauteil ist hierbei bevorzugt als hohlförmiges Gehäuse ausgeführt. Ebenfalls bevorzugt weisen das Gehäuse und die Klappe eine im Wesentlichen zylinderförmige Gestalt mit einem kreis- oder ellipsenförmigen Querschnitt auf.

Bevorzugt ist der zumindest eine Abstandshalter an der die Öffnung des Gehäuses umschließenden Stirnseite des Rückschlagklappengehäuses und/oder an der der Öffnung zugewandten Seite der Klappe angeordnet. Hierdurch wird vorteilhafter Weise eine Kontaktierung, insbesondere über einen größeren Bereich, der Stirnseite durch die Klappe vermieden und somit einem Festfrieren der beiden Bauteile entgegengewirkt.

Der zumindest eine Abstandshalter kann mit dem Gehäuse und/oder der Klappe verbunden sein. Bevorzugt ist er nur mit einem der beiden Bauteile verbunden.

Weiter bevorzugt ist die Klappe der Rückschlagklappe über ein Gelenk, weiter bevorzugt ein Scharniergelenk, an dem Gehäuse angebracht. Ebenfalls bevorzugt ist die Klappe der Rückschlagklappe federbelastet, sodass die Rückschlagklappe ohne das Einwirken einer weiteren Kraft im geschlossenen Zustand vorliegt.

In einer besonders bevorzugten Ausführungsform weist die Rückschlagklappe lediglich einen einzelnen Abstandshalter auf. Dieser ist noch bevorzugter mit der Klappe bzw. dem Gehäuse der Rückschlagklappe verbunden und (bezogen auf die von der Klappe verschlossene Öffnung) gegenüber dem Gelenk zwischen Klappe und Gehäuse der Rückschlagklappe angeordnet.

Der zumindest eine Abstandshalter der vorliegenden Erfindung kann jede geeignete Ausgestaltung annehmen, durch die seine Funktion gewährleistet wird. Dementsprechend kann der Abstandshalter beispielsweise als ein Vorsprung, eine Nase, oder ein Stift ausgebildet sein, welche(r) sich von dem verbundenen Bauteil weg erstreckt. Es ist jedoch ebenfalls möglich, dass der zumindest eine Abstandshalter die Form eines auf der Oberfläche des Bauteils angeordneten durchgängigen, oder teilweise unterbrochenen Grats aufweist. Der zumindest eine Abstandshalter ist immer so an einem der beiden Bauteile angeordnet, dass er in den Raum zwischen diesem verbunden Bauteil und dem zu kontaktierenden Bauteil ragt.

Bevorzugt erstreckt sich der zumindest eine Abstandshalter entlang der Normalenrichtung des Bauteils, mit dem er verbunden ist. Dies bedeutet in anderen Worten, dass sich der Abstandshalter senkrecht von der Fläche des Bauteils, mit dem er verbunden ist, auf das zu kontaktierende Bauteil hin erstreckt. In einer anderen bevorzugten Ausführungsform erstreckt sich der zumindest eine Abstandshalter entlang einer sich von der Normalenrichtung des Bauteils abweichenden Richtung. Dies hat, unter anderem, den Vorteil eines besseren Ablaufverhaltens von Flüssigkeit. Auch Kombinationen von Abstandshaltern, die sich entlang der Normalenrichtung des verbundenen Bauteils erstrecken, mit Abstandshaltern, die sich in einer von dieser Normalenrichtung abweichenden Richtung erstrecken sind möglich.

In einer alternativen Ausführungsform der Erfindung ist der zumindest eine Abstandshalter als Abstandsstift ausgebildet, womit sich vorteilhafter Weise ein im Wesentlichen punktförmiger Kontaktierungsbereich zwischen Abstandsstift und kontaktiertem Bauteil ergibt. Noch bevorzugter verjüngt sich der Abstandsstift derart, dass sich dessen Querschnittsfläche mit zunehmendem Abstand von dem Bauteil, mit dem der Abstandsstift verbunden ist, vermindert. In anderen Worten weist der Abstandshalter eine beispielsweise kegelförmige oder konische Form auf und die Fläche des Querschnitts des Abstandshalters nimmt in dessen Erstreckungsrichtung auf das nichtverbundene Bauteil hin ab. Hierdurch wird die Basis des Abstandshalters, über den dieser mit dem verbundenen Bauteil verbunden ist, breiter als dessen Spitze, mit welcher er das zu kontaktierende zweite Bauteil kontaktiert. Erneut wird durch diese Ausgestaltung vorteilhafter Weise eine Minimierung des Kontaktierungsbereich erzielt, wohingegen der Verbindungsbereich zwischen Abstandshalter und damit verbundenem Bauteil großzügiger dimensioniert und somit stabiler ist.

Ebenfalls bevorzugt weist das erste Bauteil und/oder das zweite Bauteil zumindest zwei, bevorzugt drei, zueinander winkeläquidistante Abstandsstifte auf, die zwischen dem ersten Bauteil und dem zweiten Bauteil angeordnet sind. Beispielsweise ist im Falle des oben aufgeführten im Wesentlichen zylinderförmigen und hohlförmigen Ventilgehäuses mit darin angeordnetem lageveränderlichen Ventilkörper beträgt der Winkelabstand der Abstandsstifte, die auf der Umhüllenden von Ventilgehäuse, bzw. Ventilkörper angeordnet sind, in Draufsicht auf die Stirnseite des Ventilgehäuses bzw. des Ventilkörpers 180° (zwei Abstandsstifte), bzw. 120° (drei Abstandsstifte). Gleichsam beträgt im Falle des oben aufgeführten Flüssigkeitsstandsensors, bei dem das Führungsbauteil und der Auftriebskörper eine im Wesentlichen zylinderförmige Gestalt mit einem kreis- oder ellipsenförmigen Querschnitt aufweisen, der Winkelabstand der Abstandsstifte, die auf der Umhüllenden von Führungsbauteil bzw. Auftriebskörper angeordnet sind, in Draufsicht auf die Stirnseite des Führungsbauteil bzw. des Auftriebskörper 180° (zwei Abstandsstifte), bzw. 120° (drei Abstandsstifte). Im Falle der oben aufgeführten Rückschlagklappe mit einem Gehäuse und einer Klappe mit einer im Wesentlichen zylinderförmigen Gestalt bzw. mit einem kreis- oder ellipsenförmigen Querschnitt, beträgt der Winkelabstand der Abstandsstifte die auf der Stirnseite des Gehäuses, bzw. auf der dem Gehäuse zugewandten Seite der Klappe angeordnet sind, bei Draufsicht auf diese Stirnseite, bzw. diese dem Gehäuse zugewandte Seite 180° (zwei Abstandsstifte), bzw. 120° (drei Abstandsstifte).

In einer weiteren alternativen Ausführungsform der Erfindung ist der zumindest eine Abstandshalter zumindest teilweise ringförmig, d.h. als Ring, oder unterbrochener Ring ausgebildet. Hierbei ist der Abstandshalter noch bevorzugter um das erste, oder um das zweite Bauteil herum angeordnet. Beispielsweise ist im Falle des oben aufgeführten im Wesentlichen zylinderförmigen und hohlförmigen Ventilgehäuses mit darin angeordnetem lageveränderlichen Ventilkörper ist der zumindest eine, im Wesentlichen ringförmige Abstandshalter, auf der Umhüllenden von Ventilgehäuse und/oder Ventilkörper angeordnet. Im Falle des oben aufgeführten Flüssigkeitsstandsensors, bei dem das Führungsbauteil und der Auftriebskörper eine im Wesentlichen zylinderförmige Gestalt mit einem kreis- oder ellipsenförmigen Querschnitt aufweisen, ist der zumindest eine, im Wesentlichen ringförmige Abstandshalter, auf der Umhüllenden von Führungsbauteil bzw. Auftriebskörper angeordnet. Im Falle der oben aufgeführten Rückschlagklappe mit einem Gehäuse und einer Klappe mit einer im Wesentlichen zylinderförmigen Gestalt bzw. mit einem kreis- oder ellipsenförmigen Querschnitt, ist der zumindest eine, im Wesentlichen ringförmige Abstandshalter auf der Stirnseite des Gehäuses, bzw. auf der dem Gehäuse zugewandten Seite der Klappe angeordnet.

Weiterhin bevorzugt sind im Falle von Bauteilen mit einer überwiegenden Längserstreckung (wie beispielsweise dem zuvor beschriebenen zylinderförmigen Ventilgehäuse mit darin angeordnetem Ventilkörper) zumindest zwei Abstandshalter mit dem ersten bzw. zweiten Bauteil verbunden und derart angeordnet, dass sie entlang der Längserstreckung der Bauteile einen möglichst großen Abstand zueinander aufweisen. Dies hat den Vorteil, dass die zumindest zwei beweglichen Bauteile in einem möglichst gleichbleibenden Abstand zueinander gehalten werden und beispielsweise nicht verkanten. In Folge dessen wird ein besonders effektiver Festfrierschutz gewährleistet.

Für das zuvor beschriebene zylinderförmige Ventilgehäuse mit darin angeordnetem Ventilkörper wird eine Ausführungsform besonders bevorzugt, bei der insgesamt sechs Abstandshalter vorgesehen sind, die in zwei Gruppen von jeweils drei Abstandshaltern, bevorzugt Abstandsstiften, zwischen den beiden Bauteilen angeordnet sind. Hierbei sind die jeweils drei Abstandshalter einer Gruppe von Abstandshaltern mit winkeläquidistante, d.h. in einem Winkelabstand von 120°, zueinander angeordnet und mit der Umhüllenden des Ventilgehäuses und/oder des Ventilkörpers verbunden. Weiterhin sind die beiden Gruppen der jeweils drei Abstandshalter an im Wesentlichen entgegengesetzten Positionen des Ventilkörpers und/oder des Ventilgehäuses angeordnet, sodass zwischen den beiden Gruppen ein möglichst großer Abstand besteht. In der bevorzugtesten Ausführungsform sind alle sechs Abstandshalter ausschließlich mit einem der beiden Bauteile, noch bevorzugter mit dem Ventilkörper verbunden.

In einer weiteren, für das zuvor beschriebene zylinderförmige Ventilgehäuse mit darin angeordnetem Ventilkörper besonders bevorzugten Ausführungsform, sind zwei im Wesentlich ringförmige, bevorzugt ringförmige, Abstandshalter vorgesehen, die an im Wesentlichen entgegengesetzten Positionen des Ventilkörpers und/oder des Ventilgehäuses angeordnet sind, sodass zwischen diesen beiden Abstandshaltern ein möglichst großer Abstand besteht. In der bevorzugtesten Ausführungsform sind beide Abstandshalter ausschließlich mit einem der beiden Bauteile, noch bevorzugter mit dem Ventilkörper verbunden.

Kombinationen der zuvor beschriebenen Abstandshalter in Stift- und Ringform sind ebenfalls möglich.

In einer weiteren bevorzugten Ausführungsform weist der zumindest eine Abstandshalter ein hydrophobes Material auf. Überraschender Weise führte der Einsatz eines solchen Materials für die Abstandshalter zu einem nochmals gesteigerten Schutz vor dem Festfrieren der relativ zueinander beweglichen Bauteile. Hierbei kann der zumindest eine Abstandshalter beispielsweise mit dem hydrophoben Material beschichtet sein, oder vollständig aus diesem bestehen. Noch bevorzugter ist dieses Material ein superhydrophobes Material, bzw. ein Material das zur Ausbildung des "Lotuseffekts" zwischen Abstandshalter und Betriebsflüssigkeit führt. Vorteilhafter Weise wird der Benetzungsgrad des Abstandshalters mit der Betriebsflüssigkeit mit zunehmender Hydrophobizität des verwendeten Materials verringert, wodurch ebenfalls die Neigung zum Festfrieren der beiden beweglichen Bauteile miteinander reduziert wird.

Die Hydrophobizität kann, wie dem Fachmann bekannt, über den Kontaktwinkel zwischen der Oberfläche und der die Oberfläche benetzenden Flüssigkeit klassifiziert werden. Hierbei führen im allgemeinen Kontaktwinkel im Bereich von ungefähr 90° zur Klassifizierung als hydrophob und größere Kontaktewinkel zur Klassifizierung als superhydrophob. Der "Lotuseffekt" wird in der Regel bei Kontaktwinkel im Bereich von 160° angenommen. Das Material des Abstandshalters ist bevorzugt so zu wählen, dass der Kontaktwinkel zwischen Material des Abstandshalters und der Betriebsflüssigkeit ≥ 80 °, bevorzugt ≥ 90 °, noch bevorzugter ≥ 120 ° und am bevorzugtesten ≥ 160 ° beträgt. Der maximale Kontaktwinkel beträgt 180°, da in diesem Fall der Flüssigkeitstropfen der Betriebsflüssigkeit den Abstandshalter nur noch in einem Punkt berührt.

Die Hydrophobizität des verwendeten Materials und damit der Kontaktwinkel sowie der Benetzungsgrad hängen bekanntermaßen von der Oberflächenspannung des verwendeten Materials, sowie der der Betriebsflüssigkeit ab. Die Oberflächenspannung von üblicher, im Bereich von Kraftfahrzeugen verwendeter wässriger Harnstofflösung (SCR-Lösung) liegt für gewöhnlich im Bereich von 0,075-0,065 N/m. Dementsprechend weist das für die Abstandshalter verwendete Material der vorliegenden Erfindung vorzugsweise eine Oberflächenspannung von ≤ 0,06 N/m, noch bevorzugter eine Oberflächenspannung von ≤ 0,03 N/m auf. Hierdurch wird vorteilhafter Weise gewährleistet, dass eine möglichst geringe Benetzung der Abstandshalter durch die Betriebsflüssigkeit stattfindet, wodurch ein Festfrieren der beiden relativ zueinander beweglichen Bauteile wirkungsvoll verhindert wird. Die Oberflächenspannung von Festkörpern kann, wie dem Fachmann bekannt ist, indirekt über eine Randwinkelmessung mit einer Flüssigkeit, derer Oberflächenspannung bekannt ist, durchgeführt werden. Hierzu kann beispielsweise die Methode des liegenden Tropfens (*Sessile Drop Method*), oder das Steighöhenverfahren Verwendung finden.

Hydrophobe, bzw. superhydrophobe Materialien, mit einer Oberflächenspannung von ≤ 0,03 N/m sind dem Fachmann bekannt und schließen beispielsweise das Polyhalogenolefin Polytetrafluorethylen (PTFE) ein, Beschichtungen aus Siliziumoxid, oder Titandioxid. Besonders bevorzugt wird jedoch PTFE.

Alternativ oder zusätzlich zur Verwendung von hydrophoben oder superhydrophoben Materialien kann auch die Oberfläche des Abstandshalters derart mechanisch bearbeitet werden, sodass diese hydrophobe oder superhydrophobe Eigenschaften aufweist und einer Benetzung mit Betriebsflüssigkeit wirkungsvoll entgegengewirkt wird. Bevorzugt ist die Oberfläche des Abstandshalters mikro- oder nanostrukturiert. Für eine solche Mikro- oder Nanostrukturierung kann die Oberfläche des Abstandshalters, beispielsweise durch lithographische Verfahren, wie Photolithographie, oder Laserstrahllithographie, sowie durch Ätzverfahren behandelt werden. Überraschender Weise führte eine solche Mikro- oder Nanostrukturierung der Abstandshalteroberfläche zu einem nochmals gesteigerten Schutz vor dem Festfrieren der relativ zueinander beweglichen Bauteile.

Die zuvor beschrieben einzelnen Ausführungsformen der Erfindung sind frei miteinander kombinierbar, solange nicht explizit etwas Gegenteiliges ausgeführt wurde, oder ein offensichtlicher Ausschluss entgegensteht.

Weitere Vorteile, Einzelheiten und Merkmale der Erfindung ergeben sich nachfolgend aus den erläuterten Ausführungsbeispielen. Dabei zeigen im Einzelnen:
- Figur 1A:: eine Ansicht zweier hohlförmiger Ventilgehäuse mit jeweils einem darin angeordneten lageveränderlichen Ventilkörper gemäß einer ersten Ausführungsform der vorliegenden Erfindung;
- Figur 1 B:: eine erste Ausführungsform des lageveränderlichen Ventilkörpers, dessen Abstandshalter als Abstandsstifte ausgebildet sind;
- Figur 1C:: eine zweite Ausführungsform des lageveränderlichen Ventilkörpers, dessen Abstandshalter ringförmig ausgebildet sind und den Ventilkörper umgeben;
- Figur 1 D:: einen Längsschnitt durch die in Figur 1A gezeigten Ventilgehäuse, wobei die Abstandshalter der Ventilkörper gemäß Figur 1B ausgebildet sind;
- Figur 2A:: die Ansicht einer Rückschlagklappe gemäß einer Ausführungsform, wobei der Abstandshalter als Abstandsstift ausgebildet und mit der Klappe verbunden ist;
- Figur 2B:: die Ansicht einer Rückschlagklappe gemäß einer weiteren Ausführungsform, wobei der Abstandshalter als Abstandsstift ausgebildet und mit dem Gehäuse verbunden ist;
- Figur 2C:: die Ansicht einer Rückschlagklappe gemäß einer weiteren Ausführungsform, wobei der Abstandshalter ringförmig ausgebildet und mit der Klappe verbunden ist;
- Figur 2D:: die Ansicht einer Rückschlagklappe gemäß einer weiteren Ausführungsform, wobei der Abstandshalter ringförmig ausgebildet und mit der Stirnseite des Gehäuses verbunden ist.

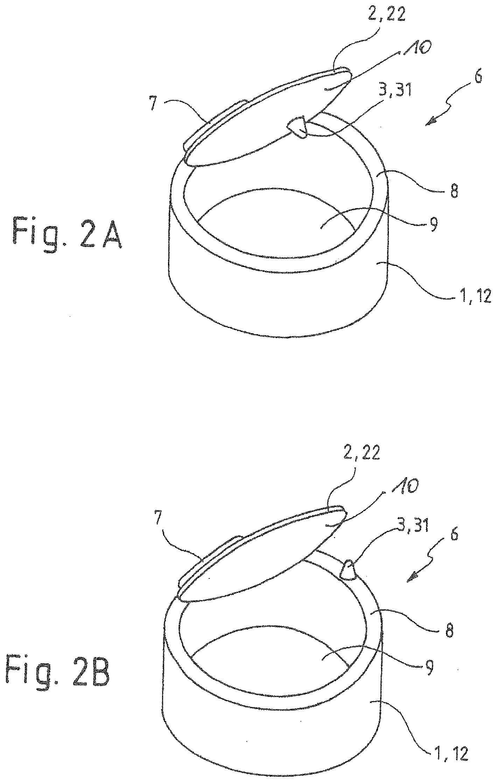

Die Figuren 2A bis 2D zeigen Ausführungsformen die nicht zur Erfindung gehören.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

Ferner wird in der folgenden Beschreibung auf einen, wässrige Harnstofflösung enthaltenden, SCR-Flüssigkeitsbehälter Bezug genommen, wobei die vorliegende Erfindung allgemein auf Betriebsflüssigkeitsbehälter, beispielsweise in Form eines Tanks für Dieselkraftstoff anwendbar ist.

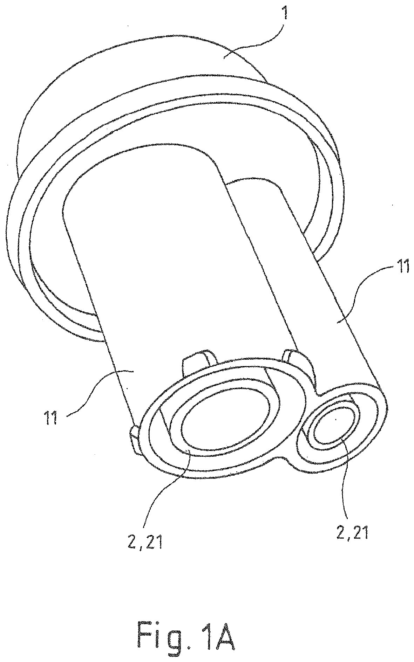

Figur 1A zeigt eine Ansicht einer in einen SCR-Behälter (nicht dargestellt) integrierten Komponente, die aus einer ersten Untereinheit besteht, welches zwei hohlförmige Ventilgehäuse (11) aufweist, wobei in jedem dieser Ventilgehäuse ein lageveränderlichen Ventilkörper (21) im Sinne der vorliegenden Erfindung angeordnet ist. Sowohl die hohlförmiges in Ventilgehäuse (11), als auch die darin angeordneten Ventilkörper (21) weisen eine im Wesentlichen zylinderförmige Gestalt mit einem kreisförmigen Querschnitt auf.

Die erste Untereinheit, bzw. die beiden hohlförmigen Ventilgehäuse (11), sowie auch der lageveränderlicher Ventilkörper (21) wurden aus Kunststoff und mittels eines Spritzgussverfahrens hergestellt.

Die erste Untereinheit, und damit auch die beiden hohlförmiges Ventilgehäuse (11), ist direkt mit dem nicht dargestellten Betriebsflüssigkeitsbehälter verbunden und damit relativ zu diesem nicht beweglich, sondern ortsfest. Demgegenüber ist der lageveränderliche Ventilkörper (21) weder mit dem Betriebsflüssigkeitsbehälter, noch mit dem Ventilgehäuse (11) verbunden, sondern relativ zu dem ersten Bauteil (1), bzw. dem hohlförmigen Ventilgehäuse (11) beweglich, in welchem er angeordnet ist.

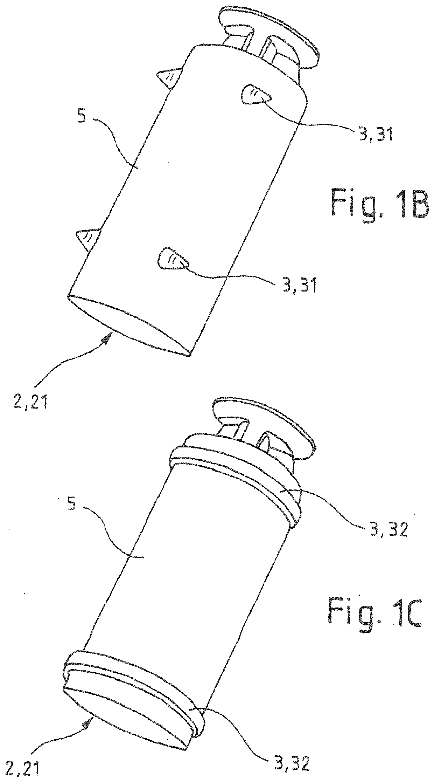

Wie aus der Figur 1B zu erkennen ist, die eine erste Ausführungsform des lageveränderlichen Ventilkörpers (21) gemäß der vorliegenden Erfindung zeigt, sind mit der Umhüllenden (5) des Ventilkörpers (21) mehrere Abstandshalter (3) verbunden, welche als konisch zulaufende Abstandsstifte (31) ausgeführt sind. Der Ventilkörper (21) mit den verbundenen Abstandshaltern (31) wurden hierbei mittels des Spritzgussverfahrens einstückig erzeugt.

Die Abstandsstifte (31) sind in zwei Gruppen an dem Ventilkörper (21) angeordnet, wobei jede der beiden Gruppen drei Abstandsstifte enthält (lediglich zwei hiervon sind jeweils dargestellt) und wobei die Abstandsstifte einer Gruppe um den Ventilkörper (21) herum und in einer Querschnittsebene des Ventilkörpers (21) angeordnet sind.

Weiterhin erstrecken sich jeweils zwei der Abstandsstifte (31) einer Gruppe entlang der Normalenrichtung des Ventilkörpers (21), während sich der verbleibende Abstandsstift (31) der Gruppe entlang einer sich von der Normalenrichtung abweichenden Richtung erstreckt.

Die beiden Gruppen von Abstandsstiften sind im Wesentlichen an den sich in Erstreckungsrichtung des zylinderförmigen Ventilkörpers (21) gegenüberliegenden Enden angeordnet.

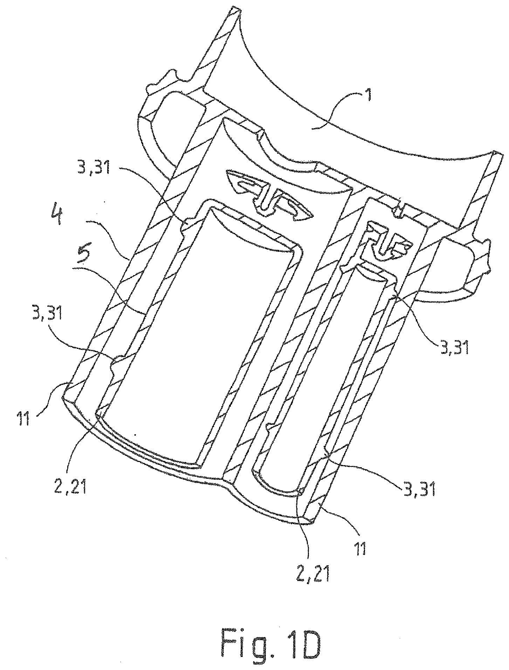

Der in der Figur 1D dargestellte Längsschnitt durch die in dem Betriebsflüssigkeitsbehälter integrierte Komponente verdeutlicht die Funktionsweise und den Kerngedanken der vorliegenden Erfindung. Wie zu erkennen ist, sind die mit dem Ventilkörper (21) verbundenen Abstandsstifte (31) so zwischen Ventilkörper (21) und Ventilgehäuse (11) angeordnet, dass der Ventilkörper (21) das Ventilgehäuse (11) lediglich über die sich verjüngenden Abstandsstifte (31) kontaktiert.

Weiterhin werden durch die konische Ausgestaltung der Abstandsstifte (31) im Wesentlichen punktförmige Kontaktierungsbereiche zwischen Ventilgehäuse (11) und Ventilkörper (21) erzeugt. Hierdurch wird vorteilhaft der Kontaktierungsbereich der beiden relativ zueinander beweglichen Bauteile (11,21) derart minimiert, dass die Neigung zum Festfrieren dieser beiden Bauteile wirkungsvoll reduziert wird.

Zusätzlich sind die Abstandsstifte (31) mit einer hydrophoben Beschichtung aus Polytetrafluorethylen versehen, die eine Oberflächenspannung von ungefähr 0,023 N/m aufweist. Da die in dem SCR-Behälter befindliche wässrige Harnstofflösung eine Oberflächenspannung im Bereich von 0,075 - 0,065 N/m aufweist, führt dies dazu dass der Benetzungsgrad der Abstandsstifte (31) mit der wässrigen Harnstofflösung, sowie die Neigung zum Festfrieren der beiden relativ zueinander beweglichen Bauteile noch weiter reduziert werden.

Aufgrund der Tatsache, dass die Abstandsstifte (31) in den zuvor beschriebenen zwei gegenüberliegenden Gruppen angeordnet sind wird weiterhin gewährleistet, dass der Ventilkörper (21) zentriert im Ventilgehäuse (11) angeordnet ist, d.h. der Abstand zwischen der Umhüllenden des Ventilgehäuses (5) zu der Umhüllenden des Ventilkörpers (4) über die Längserstreckung des Ventilkörpers (21) im Wesentlichen gleich bleibt.

Ein solcher erfindungsgemäßer SCR-Flüssigkeitsbehälter mit den oben beschriebenen integrierten Komponenten und Bauteilen konnte auch bei Temperaturen von deutlich unterhalb von -11 °C sicher und ohne ein Festfrieren der relativ zueinander beweglichen Bauteile verwendet werden. Die vorliegende Erfindung gewährleistet damit einen wirkungsvollen Schutz vor dem Festfrieren der beweglichen Bauteile in einem Betriebsflüssigkeitsbehälter.

Figur 1C stellt eine zweite Ausführungsform des lageveränderlich in Ventilkörpers (21) gemäß der Erfindung dar. Hierbei sind anstelle der beiden Gruppen von Abstandsstifte (31) zwei ringförmige Abstandshalter (32) um den Ventilkörper (21) herum angeordnet. Auch diese beiden ringförmigen Abstandshalter (32) sind hierbei im Wesentlichen an den sich in Erstreckungsrichtung des zylinderförmigen Ventilkörpers (21) gegenüberliegenden Enden angeordnet. Erneut wird hierdurch gewährleistet, dass der Ventilkörper (21) zentriert im Ventilgehäuse (11) angeordnet ist, d.h. der Abstand zwischen der Umhüllenden des Ventilgehäuses (5) zu der Umhüllenden des Ventilkörpers (4) über die Längserstreckung des Ventilkörpers (21) im Wesentlichen konstant bleibt.

Durch die Verwendung der ringförmigen Abstandshalter (32) anstelle der Abstandsstifte (31) werden im Wesentlichen linienförmige Kontaktierungsbereiche zwischen Ventilgehäuse (11) und Ventilkörper (21) erzeugt. Auch hierdurch wird vorteilhaft der Kontaktierungsbereich der beiden relativ zueinander beweglichen Bauteile (11,21) derart minimiert, dass die Neigung zum Festfrieren dieser beiden Bauteile wirkungsvoll reduziert wird.

Die beiden ringförmigen Abstandshalter (32) sind ebenfalls mit der oben aufgeführten hydrophoben Beschichtung aus Polytetrafluorethylen versehen, wodurch der Benetzungsgrad der Abstandshalter (32) mit der wässrigen Harnstofflösung, sowie die Neigung zum Festfrieren der beiden relativ zueinander beweglichen Bauteile noch weiter reduziert werden.

Auch ein solcher erfindungsgemäßer SCR-Flüssigkeitsbehälter mit einem Ventilkörper (21) nach Figur 1C konnte bei Temperaturen von deutlich unterhalb von - 11 °C sicher und ohne ein Festfrieren der relativ zueinander beweglichen Bauteile verwendet werden.

Figur 2A stellt eine weitere Ausführungsform dar, die einer in einen SCR-Flüssigkeitsbehälter (erneut nicht dargestellt) integrierten Rückschlagklappe (6) entspricht.

Die Rückschlagklappe (6) besteht aus einem Gehäuse (12), sowie einer daran angebrachten Klappe (22), mittels derer die Öffnung (9) der Rückschlagklappe (6) verschließbar ist. Sowohl das Gehäuse (12) als auch die Klappe (22) weisen eine im Wesentlichen zylinderförmige Gestalt mit einem kreisförmigen Querschnitt auf. Das Gehäuse (12) ist weiterhin hohlförmig ausgeführt und weist eine der Klappe (22) gegenüberliegende Öffnung (9) auf, die durch die Stirnseite (8) des Gehäuses (12) begrenzt wird. Sowohl die Klappe (22), als auch das Gehäuse (12) der Rückschlagklappe (6) wurden aus Kunststoff und mittels des Spritzgussverfahrens hergestellt.

Die Klappe (22) ist hierbei mittels eines Scharniers (7) an dem Gehäuse (12) angebracht und federbelastet.

Weiterhin weist die Klappe (22) an ihrer der Öffnung des Gehäuses (12) zugewandten Seite (10) einen einzelnen konisch zulaufenden Abstandsstift (31) auf, der dem Scharnier (7) gegenüberliegend angeordnet ist.

Im geschlossenen Zustand der Rückschlagklappe (6) kontaktiert der Abstandsstift (31) die Stirnseite (8) des Gehäuses (12) lediglich in einem einzigen, im Wesentlichen punktförmigen Kontaktierungsbereich. Hierbei wird insbesondere vermieden, dass die Klappe (22) mit ihrer der Öffnung des Gehäuses (12) zugewandten Seite (10) die Stirnseite (8) des Gehäuses (12) an einer weiteren Stelle kontaktiert. Hierdurch wird vorteilhaft der Kontaktierungsbereich der beiden relativ zueinander beweglichen Bauteile (12,22) derart minimiert, dass die Neigung zum Festfrieren dieser beiden Bauteile wirkungsvoll reduziert wird.

Erneut ist der Abstandsstift (31) der Klappe (22) mit der oben ausgeführten hydrophoben Beschichtung aus Polytetrafluorethylen versehen, wodurch der Benetzungsgrad des Abstandsstifts (31) mit der wässrigen Harnstofflösung, sowie die Neigung zum Festfrieren der beiden relativ zueinander beweglichen Bauteile noch weiter reduziert werden.

Figur 2B stellt eine weitere Ausführungsform der in Figur 2A dargestellten Rückschlagklappe (6) dar, bei der der einzelne Abstandsstift (31) anstelle mit der Klappe (22) nun mit dem Gehäuse (12) verbunden ist. Erneut ist der mit Polytetrafluorethylen versehene Abstandsstift (31) hierbei an einer Position angeordnet, die dem Scharnier (7) direkt gegenüber liegt.

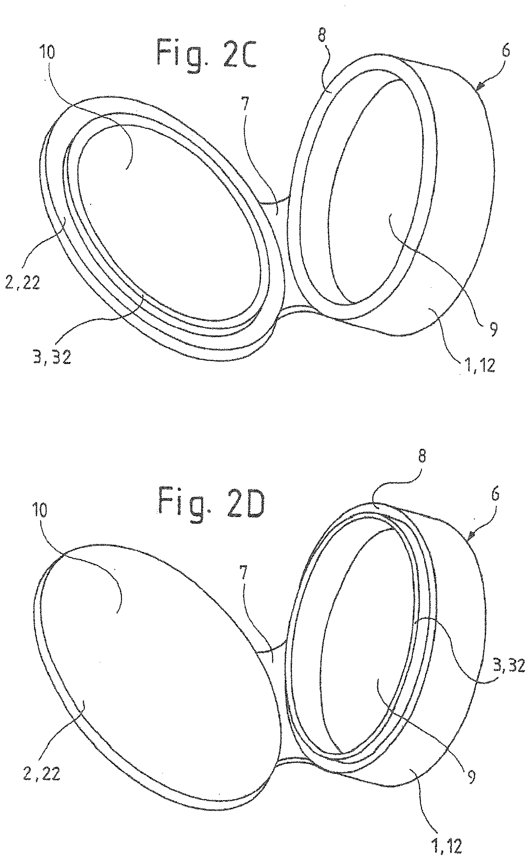

Die Figuren 2C bzw. 2D stellen zwei weitere Ausführungsformen der Rückschlagklappe (6) dar, bei der der einzelne Abstandsstift (31), die in den Figuren 2A bzw. 2B ausgeführt, durch einen ringförmigen und ebenfalls mit Polytetrafluorethylen beschichteten Abstandshalter (32) ersetzt wurde.

In Figur 2C ist dieser ringförmige Abstandshalter (32) mit der der Öffnung des Gehäuses (6) zugewandten Seite (10) der Klappe (22) verbunden, sodass er im geschlossenen Zustand der Rückschlagklappe (6) die Stirnseite (8) des Gehäuses (12) kontaktiert.

In Figur 2D ist er mit der Stirnseite (8) des Gehäuses (12) der Rückschlagklappe (6) verbunden, sodass er im geschlossenen Zustand der Rückschlagklappe (6) die der Öffnung des Gehäuses (12) zugewandte Seite der Klappe (10) kontaktiert.

Durch die Verwendung der ringförmigen Abstandshalter (32) anstelle der Abstandsstifte (31) werden im Wesentlichen linienförmige Kontaktierungsbereiche zwischen Gehäuse (12) und Klappe (22) erzeugt. Auch hierdurch wird vorteilhaft der Kontaktierungsbereich der beiden relativ zueinander beweglichen Bauteile (11,21) derart minimiert, dass die Neigung zum Festfrieren dieser beiden Bauteile wirkungsvoll reduziert wird. Gleichsam konnte durch eine hydrophobe Beschichtung des ringförmigen Abstandshalters (32) der Benetzungsgrad der Abstandshalter (32) mit der wässrigen Harnstofflösung, sowie die Neigung zum Festfrieren der beiden relativ zueinander beweglichen Bauteile noch weiter reduziert werden.

### Bezugszeichenliste

- 1: Erstes Bauteil
- 2: Zweites Bauteil
- 3: Abstandshalter
- 11: Ventilgehäuse
- 12: Gehäuse der Rückschlagklappe
- 21: Lageveränderlicher Ventilkörper
- 22: Klappe der Rückschlagklappe
- 31: Konisch zulaufender Abstandsstift
- 32: Ringförmiger Abstandshalter
- 4: Umhüllende des ersten Bauteils
- 5: Umhüllende des zweiten Bauteils
- 6: Rückschlagklappe
- 7: Scharnier
- 8: Stirnseite (des Gehäuses der Rückschlagklappe)
- 9: Öffnung des Gehäuses der Rückschlagklappe
- 10: Der Öffnung des Gehäuses zugewandten Seite der Klappe

## Patentansprüche

1. Betriebsflüssigkeitsbehälter zur Aufnahme einer wässrigen Harnstofflösung für ein SCR-Verfahren mit zumindest zwei relativ zueinander beweglichen und mit der Harnstofflösung in Kontakt bringbaren Bauteilen (1,2), wobei der Betriebsflüssigkeitsbehälter folgende Merkmale aufweist:
- am ersten Bauteil (1) und/oder am zweiten Bauteil (2) ist zumindest ein Abstandshalter (3) angebracht, der zwischen dem ersten Bauteil und dem zweiten Bauteil angeordnet ist;
- der Abstandshalter ist lediglich mit dem ersten Bauteil oder lediglich mit dem zweiten Bauteil verbunden; und
- das erste Bauteil ist mit dem zweiten Bauteil mittels des Abstandshalters in Kontakt bringbar,
wobei
das erste Bauteil (1) als hohlförmiges Ventilgehäuse (11) und das zweite Bauteil (2) als im Ventilgehäuse lageveränderlicher Ventilkörper (21) ausgebildet ist
der Ventilkörper durch den zumindest einen Abstandshalter im Inneren des Ventilgehäuses führbar ist,
das erste Bauteil (1) und das zweite Bauteil (2) eine im Wesentlichen zylinderförmige Gestalt mit einem kreis- oder ellipsenförmigen Querschnitt aufweist
**dadurch gekennzeichnet, dass** der zumindest eine Abstandshalter (3) als Abstandsstift (31) ausgebildet ist oder dass der zumindest eine Abstandshalter (32) als unterbrochener Ring ausgebildet ist.

2. Betriebsflüssigkeitsbehälter nach Anspruch 1, wobei der zumindest eine Abstandshalter (3) als Abstandsstift (31) ausgebildet ist, **dadurch gekennzeichnet, dass** sich der Abstandshalter (3) derart verjüngt, dass sich dessen Querschnittsfläche mit zunehmendem Abstand von dem Bauteil, mit dem der Abstandshalter verbunden ist, vermindert.

3. Betriebsflüssigkeitsbehälter nach einem der Ansprüche 1-2, wobei der zumindest eine Abstandshalter (3) als Abstandsstift (31) ausgebildet ist **dadurch gekennzeichnet, dass** am ersten Bauteil (1) und/oder am zweiten Bauteil (2) zumindest zwei zueinander winkeläquidistante Abstandsstifte (31) angebracht sind, die zwischen dem ersten Bauteil und dem zweiten Bauteil angeordnet sind.

4. Betriebsflüssigkeitsbehälter nach einem der Ansprüche 1-3, wobei der zumindest eine Abstandshalter (3) als Abstandsstift (31) ausgebildet ist, **dadurch gekennzeichnet, dass** sich zumindest ein Abstandshalter (3) von dem mit diesem verbundenen Bauteil (1, 2) entlang der Normalenrichtung des Bauteils erstreckt.

5. Betriebsflüssigkeitsbehälter nach Anspruch 1, wobei der zumindest eine Abstandshalter (3) als unterbrochener Ring ausgebildet ist, **dadurch gekennzeichnet, dass** der Abstandshalter (32) um das erste Bauteil (1) oder um das zweite Bauteil (2) herum angeordnet ist.

6. Betriebsflüssigkeitsbehälter nach einem der Ansprüche 1 oder 5, wobei der zumindest eine Abstandshalter (3) als unterbrochener Ring ausgebildet ist, **dadurch gekennzeichnet, dass** der Abstandshalter (3) an einer Stirnseite (8) des ersten Bauteils (1) oder des zweiten Bauteils (2) angebracht ist.

7. Betriebsflüssigkeitsbehälter nach einem der vorstehenden Ansprüche, **dadurch gekennzeichnet, dass** der Abstandshalter (3) ein hydrophobes Material aufweist.

8. Betriebsflüssigkeitsbehälter nach Anspruch 7, **dadurch gekennzeichnet, dass** das hydrophobe Material ein Material mit einer Oberflächenspannung von weniger als 0,06 N/m, bevorzugt weniger als 0,03 N/m ist.

9. Betriebsflüssigkeitsbehälter nach Anspruch 7 oder 8, **dadurch gekennzeichnet, dass** hydrophobe Material ein Polyhalogenolefin oder Polytetrafluorethylen ist.

## Claims

1. Operating fluid container for accommodating an aqueous urea solution for an SCR method, having at least two components (1, 2) which are movable relative to one another and can be brought into contact with the urea solution, the operating fluid container having the following features:
- at least one spacer (3) is attached to the first component (1) and/or to the second component (2), said spacer being arranged between the first component and the second component;
- the spacer is only connected to the first component or only connected to the second component; and
- the first component can be brought into contact with the second component by means of the spacer,
the first component (1) being designed as a hollow valve housing (11) and the second component (2) being designed as a valve body (21) that is positionally variable in the valve housing,
it being possible to guide the valve body in the interior of the valve housing by means of the at least one spacer,
the first component (1) and the second component (2) having a substantially cylindrical shape with a circular or elliptical cross section,
**characterized in that** the at least one spacer (3) is designed as a spacer pin (31) or **in that** the at least one spacer (32) is designed as an interrupted ring.

2. Operating fluid container according to claim 1, the at least one spacer (3) being designed as a spacer pin (31), **characterized in that** the spacer (3) tapers such that its cross-sectional area decreases as the distance from the component to which the spacer is connected increases.

3. Operating fluid container according to either claim 1 or claim 2, the at least one spacer (3) being designed as a spacer pin (31), **characterized in that** at least two mutually angularly equidistant spacer pins (31) are attached to the first component (1) and/or to the second component (2), said pins being arranged between the first component and the second component.

4. Operating fluid container according to any of claims 1-3, the at least one spacer (3) being designed as a spacer pin (31), **characterized in that** at least one spacer (3) extends from the component (1, 2) connected thereto in the normal direction of the component.

5. Operating fluid container according to claim 1, the at least one spacer (3) being designed as an interrupted ring, **characterized in that** the spacer (32) is arranged around the first component (1) or around the second component (2).

6. Operating fluid container according to either claim 1 or claim 5, the at least one spacer (3) being designed as an interrupted ring, **characterized in that** the spacer (3) is attached to an end face (8) of the first component (1) or of the second component (2).

7. Operating fluid container according to any of the preceding claims, **characterized in that** the spacer (3) comprises a hydrophobic material.

8. Operating fluid container according to claim 7, **characterized in that** the hydrophobic material is a material that has a surface tension of less than 0.06 N/m, preferably less than 0.03 N/m.

9. Operating fluid container according to either claim 7 or claim 8, **characterized in that** the hydrophobic material is a polyhalogenolefin or polytetrafluoroethylene.

## Revendications

1. Récipient de liquide de fonctionnement destiné à contenir une solution d'urée aqueuse pour un procédé RCS, comportant au moins deux composants (1, 2) mobiles l'un par rapport à l'autre et pouvant être mis en contact avec la solution d'urée, dans lequel le récipient de liquide de fonctionnement présente les caractéristiques suivantes :
- au moins un espaceur (3) est monté sur le premier composant (1) et/ou sur le second composant (2) et est disposé entre le premier composant et le second composant ;
- l'espaceur est relié uniquement au premier composant ou uniquement au second composant ; et
- le premier composant peut être mis en contact avec le second composant à l'aide de l'espaceur,
dans lequel
le premier composant (1) est réalisé sous forme de boîtier de soupape (11) creux et le second composant (2) est réalisé sous forme de corps de soupape (21) à position variable dans le boîtier de soupape
le corps de soupape peut être guidé à l'intérieur du boîtier de soupape par l'au moins un espaceur,
le premier composant (1) et le second composant (2) présentent une forme sensiblement cylindrique comportant une section transversale circulaire ou elliptique
**caractérisé en ce que** l'au moins un espaceur (3) est réalisé sous forme de goupille d'espacement (31) ou **en ce que** l'au moins un espaceur (32) est réalisé sous forme d'anneau discontinu.

2. Récipient de liquide de fonctionnement selon la revendication 1, dans lequel l'au moins un espaceur (3) est réalisé sous forme de goupille d'espacement (31), **caractérisé en ce que** l'espaceur (3) se rétrécit de sorte que sa surface de section transversale diminue a mesure qu augmente la distance par rapport au composant auquel est relié l'espaceur.

3. Récipient de liquide de fonctionnement selon l'une des revendications 1 à 2, dans lequel l'au moins un espaceur (3) est réalisé sous forme de goupille d'espacement (31), **caractérisé en ce que**, sur le premier composant (1) et/ou sur le second composant (2), au moins deux goupilles d'espacement (31) sont montées de manière équidistante angulairement l'une par rapport à l'autre, lesquelles sont disposées entre le premier composant et le second composant.

4. Récipient de liquide de fonctionnement selon l'une des revendications 1 à 3, dans lequel l'au moins un espaceur (3) est réalisé sous forme de goupille d'espacement (31), **caractérisé en ce qu'**au moins un espaceur (3) s'étend depuis le composant (1, 2) auquel il est relié le long de la direction normale du composant.

5. Récipient de liquide de fonctionnement selon la revendication 1, dans lequel l'au moins un espaceur (3) est réalisé sous forme d'anneau discontinu, **caractérisé en ce que** l'espaceur (32) est disposé autour du premier composant (1) ou autour du second composant (2).

6. Récipient de liquide de fonctionnement selon l'une des revendications 1 ou 5, dans lequel l'au moins un espaceur (3) est réalisé sous forme d'anneau discontinu, **caractérisé en ce que** l'espaceur (3) est monté sur une face frontale (8) du premier composant (1) ou du second composant (2).

7. Récipient de liquide de fonctionnement selon l'une quelconque des revendications précédentes, **caractérisé en ce que** l'espaceur (3) présente un matériau hydrophobe.

8. Récipient de liquide de fonctionnement selon la revendication 7, **caractérisé en ce que** le matériau hydrophobe est un matériau comportant une tension de surface inférieure à 0,06 N/m, de préférence inférieure à 0,03 N/m.

9. Récipient de liquide de fonctionnement selon la revendication 7 ou 8, **caractérisé en ce que** le matériau hydrophobe est une polyhalogénoléfine ou du polytétrafluoroéthylène.
